# EUROPEAN PATENT APPLICATION

(11) **EP 2 009 253 A1**
(43) Date of publication of application: **31.12.2008**
(21) Application number: 06731913.7
(22) Date of filing: 14.04.2006
(51) Int. Cl.: F01K 9/00, F01K 23/10, C10L 3/06, F02C 3/28

(54) **METHOD OF DECOMPOSING GAS HYDRATE, AND APPARATUS THEREFOR, IN GAS TURBINE COMBINED POWER GENERATION SYSTEM**

(71) Applicant: Mitsui Engineering and Shipbuilding Co, Ltd., Tokyo 104-8439 (JP)
(72) Inventor: SUZUKI, Takeshi, Chuo-ku, Tokyo 104-8439 (JP)
(74) Representative: Köppen, Manfred
(86) International application number: PCT/JP2006/307977
(87) International publication number: WO 2007/122692

(57) **Abstract**

A gas turbine combined power generation system using, as a fuel, gas (c) generated by decomposition of gas hydrate (h). The system includes a pump (19) for circulating condensate (n) produced by a condenser (10) to the vapor inlet side of the condenser, a heat exchanger (11) for exchanging heat between the circulating condensate (r) and circulating water (i) supplied to decompose the gas hydrate (h), and a pump (26) for circulating the circulating water to a decomposition tank (32) for the gas hydrate (h).

## Description

### TECHNICAL FIELD

The present invention relates to a method of thermally decomposing gas hydrate, and an apparatus therefor, in a gas turbine combined power generation system.

### BACKGROUND ART

Recently, proposals are being considered wherein NGH (natural gas hydrate) is produced instead of LNG (liquid natural gas) in overseas gas fields, and after importing such NGH, the NGH is regasified and restored to natural gas at an NGH facility, being then supplied fuel to gas turbine combined power generation equipment (see patent literature 1 and patent literature 2, for example).
Patent Literature 1: Japanese patent application Kokai publication No. 2002-371862 (pgs. 3-4, Fig. 1)
Patent Literature 2: Japanese patent application Kokai publication No. 11-200884 (pgs. 3-4, Fig. 1)

### DISCLOSURE OF THE INVENTION

When regasifying NGH into natural gas, it has been proposed that NGH, being offloaded from an NGH carrier vessel and into an NGH facility, be fed into a gasification tank and then regasified using seawater. Seawater is also used as a heat source when gasifying LNG. However, NGH is a hydrate of natural gas and water, and the temperature difference between the temperature of NGH (-20 °C, for example) and the temperature of seawater (21 °C, for example) is small. For these and other reasons, NGH gasification is difficult compared to that of LNG. Thus, the heat transfer area during gasification must be inevitably made larger.

Meanwhile, in gas turbine combined power generation equipment, steam exhausted from a steam turbine is condensed by a condenser, and subsequently returned to a waste heat boiler, where the condensed steam is re-heated using gas turbine exhaust gas.

Typically, the temperature (33 °C, for example) of the condenser in gas turbine combined power generation equipment is higher than the temperature of the seawater (typically, the seawater temperature is set to 21 °C). For this reason, by using steam condensate instead of seawater, a heat exchanger for gasification can be rendered unnecessary.

However, if the steam condensate used for regasifying NGH exceeds a predefined value of the gas turbine power generation equipment, the temperature of the condensate will fall below a predefined temperature (33 °C, for example). As a result, the quantity and temperature of the steam generated in the waste heat boiler will decrease, leading to a state of reduced power generation efficiency.

The present invention was devised to resolve such problems, an object thereof being to provide a method and apparatus for thermally decomposing gas hydrate in a gas turbine combined power generation system, wherein a heat exchanger for gasification is rendered unnecessary, and wherein the condensate temperature does not fluctuate.

In order to achieve such an object, the present invention is configured as follows. The invention disclosed in claim 1 is a method of decomposing gas hydrate in a gas turbine combined power generation system, the gas turbine combined power generation system using, as a fuel, gas generated by decomposition of gas hydrate. The method includes the steps of: circulating condensate generated in a condenser to the vapor inlet side of the condenser; exchanging heat between the circulating condensate and circulating water supplied to decompose gas hydrate; and using the heat-exchanged circulating water to decompose gas hydrate.

The invention disclosed in claim 2 is an apparatus for decomposing gas hydrate in a gas turbine combined power generation system, the gas turbine combined power generation system using, as a fuel, gas generated by decomposition of gas hydrate. The apparatus is provided with: a pump that circulates condensate generated in a condenser to the vapor inlet side of the condenser; a heat exchanger that causes heat to be exchanged between the circulating condensate and circulating water supplied to decompose gas hydrate; and a pump that circulates the circulating water to a gas hydrate thermal decomposition tank.

As described above, the invention disclosed in claim 1 is utilized in a gas turbine combined power generation system using, as a fuel, gas generated by decomposition of gas hydrate. Condensate generated in a condenser is circulated to the vapor inlet side of the condenser, the circulating condensate is then made to exchange heat with circulating water supplied to decompose gas hydrate, and then the heat-exchanged circulating water is used to decompose gas hydrate. Consequently, the following advantages are obtained.

(a) Since the heating medium (i.e., the circulating water) for thermal decomposition of gas hydrate is heated by using condensate from the condenser, the operating temperature of the gasification tank can be set to a high value.

(b) The gas hydrate thermal decomposition reaction time is determined according to the temperature difference (ΔT) between the equilibrium temperature of the gas hydrate in the gasification tank and the operating temperature in the tank. Since the present invention is able to increase ΔT, the gas hydrate thermal decomposition time can be shortened.

(c) Since the gas hydrate residence time is short when the gas hydrate thermal decomposition time is short, the volume of the gasification tank can be made smaller.

(d) If circulating water is directly sprayed onto the heat transfer tubes of the condenser, the film thickness of the liquid film on the circumference of the heat transfer tubes becomes larger and is thought to inhibit heat transfer. However, if exhaust steam from the steam turbine and circulating condensate are put into direct contact at the condenser inlet as described above, condensation of the exhaust steam from the steam turbine is facilitated and seawater quantities are reduced. For these reasons, the heat transfer area of the condenser can be made smaller than that of a conventional condenser (i.e., a condenser using only seawater for heating/cooling).

(e) Since the temperature difference between the heating medium for gas hydrate thermal decomposition (i.e., the circulating water) and the circulating condensate is increased compared to that of seawater, the heat transfer area of the heat exchanger for gas hydrate thermal decomposition can be decreased.

Meanwhile, the invention disclosed in claim 2 is utilized in a gas turbine combined power generation system using, as a fuel, gas generated by decomposition of gas hydrate, and is provided with: a pump that circulates condensate generated in a condenser to the vapor inlet side of the condenser; a heat exchanger that causes heat to be exchanged between the circulating condensate and circulating water supplied to decompose gas hydrate; and a pump that circulates the circulating water to a gas hydrate thermal decomposition tank. Thus, similarly to the invention disclosed in claim 1, the following advantages are obtained.

(a) Since the heating medium (i.e., the dissociated liquid) for thermal decomposition of gas hydrate is heated by using condensate from the condenser, the operating temperature of the gasification tank can be set to a high value.

(b) The gas hydrate thermal decomposition reaction time is determined according to the temperature difference (ΔT) between the equilibrium temperature of the gas hydrate in the gasification tank and the operating temperature in the tank. Since the present invention is able to increase ΔT, the gas hydrate thermal decomposition time can be shortened.

(c) Since the gas hydrate residence time is short when the gas hydrate thermal decomposition time is short, the volume of the gasification tank can be made smaller.

(d) If circulating water is directly sprayed onto the heat transfer tubes of the condenser, the film thickness of the liquid film on the circumference of the heat transfer tubes becomes larger and is thought to inhibit heat transfer. However, if exhaust steam from the steam turbine and circulating condensate are put into direct contact at the condenser inlet as described above, condensation of the exhaust steam from the steam turbine is facilitated and seawater quantities are reduced. For these reasons, the heat transfer area of the condenser can be made smaller than that of a conventional condenser (i.e., a condenser using only seawater for heating/cooling)

(e) Since the temperature difference between the heating medium for gas hydrate thermal decomposition (i.e., the circulating water) and the circulating condensate can be increased, the heat transfer area of the heat exchanger for gas hydrate thermal decomposition can be decreased.

### BRIEF DESCRIPTION OF THE DRAWINGS

Fig. 1 is a schematic diagram of the configuration of equipment for carrying out the method of thermally decomposing gas hydrate in a co-generation system in accordance with the present invention.
Fig. 2 is a schematic diagram of the configuration of a gas hydrate thermal decomposition apparatus.
Fig. 3 is a horizontal cross-sectional view of an improved steam turbine condenser.
Fig. 4 is a vertical cross-sectional view of an improved steam turbine condenser.
Fig. 5 is a diagram illustrating the heat and material balance in a gasification tank.
Fig. 6 is a diagram illustrating the heat and material balance in an improved steam turbine condenser.

### PREFERRED MODES FOR CARRYING OUT THE INVENTION

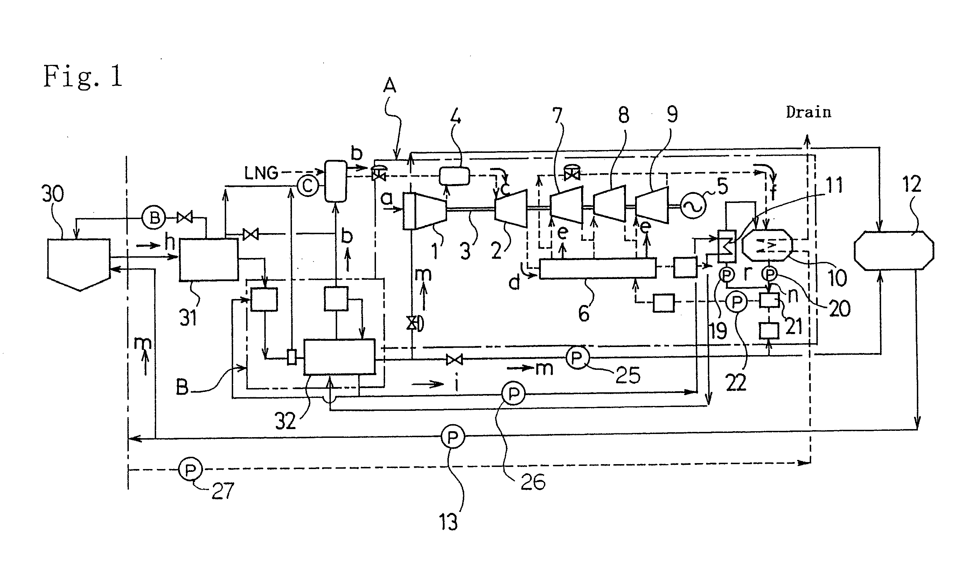

Hereinafter, embodiments of the invention will be described with reference to the accompanying drawings. In Fig. 1, (A) represents gas turbine power generation equipment, and (B) represents a gas hydrate thermal decomposition apparatus.

The gas turbine power generation equipment (A) includes a compressor 1 and a turbine 2 coaxially coupled about a turbine shaft 3, and burns fuel gas (more specifically, natural gas (b)) inside a combustion chamber 4 using air (a) compressed at the compressor 1. At that point, the high-temperature, high-pressure fuel gas (c) thus generated is expanded in the turbine 2 so as to drive a power generator 5 coupled to the turbine shaft 3.

Moreover, the gas turbine power generation equipment (A) feeds high-temperature exhaust gas (d) exhausted from the turbine 2 to a waste heat boiler 6, and steam (e) generated by heat recovery is then respectively expanded in steam turbines 7, 8, and 9 coupled to the turbine shaft 3, thereby driving the power generator 5. Steam (f) exhausted from the steam turbines 7, 8, and 9 is condensed at a condenser 10, the condensate being again returned to the waste heat boiler 6.

Meanwhile, the gas hydrate thermal decomposition apparatus (B) thermally decomposes gas hydrate (h) in pellet form in a gasification tank 32, the gas hydrate (h) having been transported to a storage tank 31 by a carrier vessel 30. The natural gas (b) generated by thermal decomposition is supplied to the above combustion chamber 4, while the dissociated liquid (m) generated at the same time is used as cooling water for intake cooling of the compressor 1, as boiler supply water for the waste heat boiler 6, and as ballast water for the carrier vessel 30.

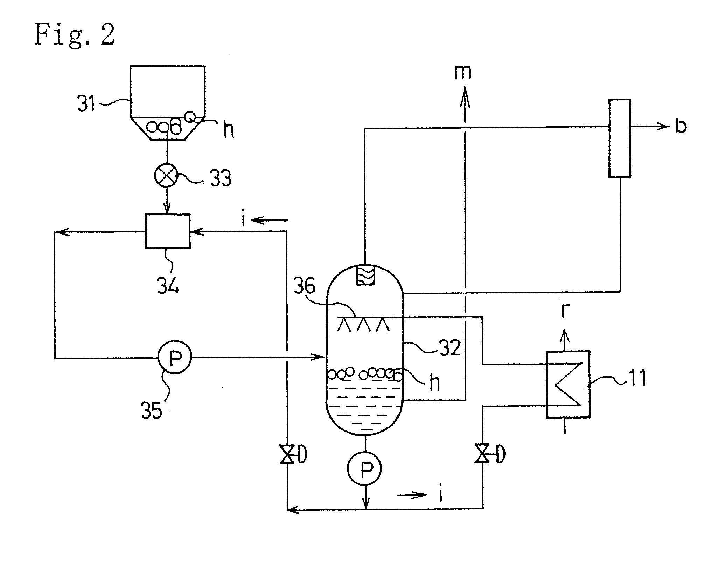

To describe the above in further detail: as shown in Fig. 2, the gas hydrate (h) in the storage tank 31 is first finely crushed by a crusher (not shown in the drawings), and subsequently supplied to a mixer 34 by a rotary valve 33. The gas hydrate (h) (approx. 10 mm) inside the mixer 34 is slurried by circulating water (i) supplied from the gasification tank 32, and then fed into the gasification tank 32 by a slurry pump 35.

Meanwhile, the circulating water (i) from the gasification tank 32 is heated at a heat exchanger 11 using condensate (n) from the condenser 10 as a heat source, whereby the circulating water (i) is provided with the necessary decomposition heat for decomposing the gas hydrate (h). Subsequently, the gas hydrate (h) in the gasification tank 32 is sprayed with the heated circulating water (i) from spray nozzles 36 provided inside the tank. The gas hydrate (h) dissociates by thermal decomposition into natural gas (b) and a portion of the circulating water (i) (i.e., dissociated liquid). The natural gas (b) dissociated is fed into the gas turbine combustion chamber 4. Since the generated portion of the circulating water (i) (i.e., the dissociated liquid (m)) collects in the gasification tank 32, the dissociated liquid (m) is continually flushed.

As already described, this portion of the circulating water (i) is used as cooling water for intake cooling of the gas turbine 2, as boiler supply water for the waste heat boiler 6, and as ballast water for the carrier vessel 30. At this point, as shown in Fig. 1, all water except the boiler feed water for the waste heat boiler 6 is accumulated in a water tank 12, and subsequently added to the ballast water of the carrier vessel 30 by a recovered water transfer pump 13.

Although seawater is typically used as a heating/cooling source in the condenser 10, the condensate (n) of the condenser 10 has a temperature exceeding that of seawater (33 °C, for example), and is an ideal heat source for regasification of the gas hydrate (h). Herein, the temperature of the seawater (p) is 21 °C.

However, when heat is recovered from the condensate, the condensate temperature falls below a predefined temperature (33 °C, for example) and essentially becomes boiler feed water, leading to a state of reduced power generation efficiency. Consequently, it is necessary to plan such that the temperature of the condensate does not fluctuate.

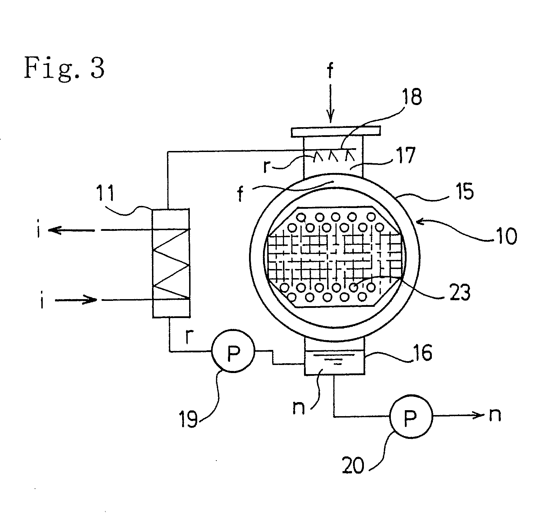

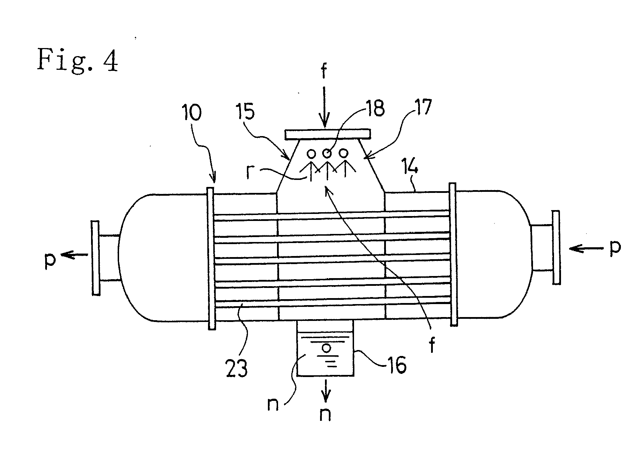

Thus, in the present invention, improvements are made by modifying the condenser such that the temperature of the condensate does not fluctuate, even if a portion of the heat of the condensate (n) is recovered. More specifically, as shown in Figs. 3 and 4, a portion of the body 14 of a horizontal condenser 10 is increased in diameter, a condensate collector 16 is provided underneath this large-diameter portion 15, and in addition, condensate spray nozzles 18 are provided in the upper space (inlet) 17 of the large-diameter portion 15.

Furthermore, the invention is configured such that, after drawing a portion of the condensate (n) in the condensate collector 16 by using a first pump 19, circulating water (r) is injected into the steam (f) in the upper space (inlet) 17 of the condenser 10, the circulating water (r) being sprayed from the above condensate spray nozzles 18. The circulating water (r) is generated from the condensate (n) via the heat exchanger 11 already described.

It is thought that if the circulating water (r) is simply sprayed on the heat transfer tubes 23 of the condenser 10, the liquid film on the heat transfer tubes 23 becomes thicker and inhibits heat transfer. However, as described above, if the circulating water (r) is sprayed at the steam (f) in the upper space (inlet) 17 of the condenser 10 from the condensate spray nozzles 18, the circulating water (r) and the steam (f) come into direct contact above the heat transfer tubes 23, thereby promoting condensation of the steam (f). For this reason, the heat transfer area of the heat transfer tubes 23 can be made smaller than that of a conventional condenser (i.e., a condenser using only seawater for heating/cooling).

The majority of the circulating water (r) is pumped out by a second pump 20, flows into a condensation chamber 21, and is subsequently fed into the waste heat boiler 6 by a condensate recovery pump 22.

In Fig. 1, 25 is a recovered water pump, 26 is a decomposition tank fluid recirculation pump, and 27 is a cooling water pump.

### Embodiment

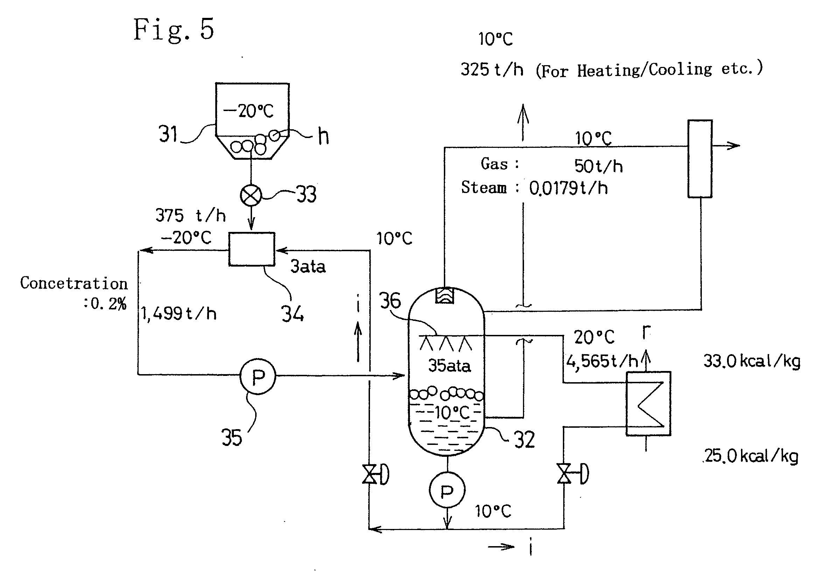

Fig. 5 illustrates the heat and material balance in a gasification tank that feeds 50 t/h natural gas into a gas turbine combustion chamber.

Gas hydrate (h) in pellet form in a storage tank 31 is first finely crushed by a crusher (not shown in the drawings), and subsequently fed into a mixer 34 by a rotary valve 33 (feed rate: 375 t/h, temperature: -20 °C).

Gas hydrate (h) (approx. 10 mm) in the mixer 34 is slurried (slurry concentration: 0.2 %) by water (i) (circulating water) (water temperature: 10 °C, pressure: 3 ata (0.29 MPa), feed rate: 1,499 t/h) supplied from a gasification tank 32. The slurry is then fed into the gasification tank 32 by a slurry pump 35.

The gasification tank 32 has an operating temperature of 10 °C and an operating pressure of 35 ata (3.43 MPa), wherein water (i) (circulating water) at the operating temperature is circulated (4,565 t/h), the water (i) being heated in an external heat exchanger 11, using circulating water (r) as a heat source.

The heated water (i) (circulating water) (20 °C) is then sprayed into the tank from spray nozzles 36. The amount of the dissociated water (m) is 325 t/h. The amount of natural gas is 50 t/h plus some amount (0.0179 t/h) in the form of moisture-saturated gas, these amounts corresponding to the quantity of gas hydrate that was loaded into the tank.

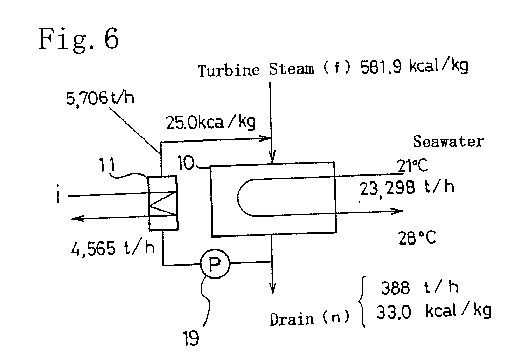

Fig. 6 illustrates the heat and material balance in an improved steam turbine condenser. The condenser 10 (drain rate: 388 t/h, entropy: 33.0 kcal/kg) uses seawater for cooling (feed rate: 23,298 t/h) and the heat of condensation of the turbine exhaust steam for the gas hydrate thermal load. In this case, since the vacuum degree of the condenser sustains normal operation, the condenser is modified to recirculate (circulation rate: 5,706 t/h) and spray drain.

Herein, the condenser cooling water rate G' is
G' = 29,682 t/h
in the case where the gas hydrate decomposition heat is not used. Thus, the gas hydrate decomposition heat corresponds to 21.4 % of the heat load of the condenser.

In other words, if N is taken to be the thermal load of the condenser required for the gas hydrate decomposition heat, then
N = (1 - 23298/29682) x 100 = 21.4

## Claims

1. A method of decomposing gas hydrate in a gas turbine combined power generation system, the gas turbine combined power generation system using, as a fuel, gas generated by decomposition of gas hydrate, and the method comprising the steps of:
circulating condensate generated in a condenser to the vapor inlet side of the condenser;
exchanging heat between the circulating condensate and circulating water supplied to decompose gas hydrate; and
using the heat-exchanged circulating water to decompose gas hydrate.

2. An apparatus for decomposing gas hydrate in a gas turbine combined power generation system, the gas turbine combined power generation system using, as a fuel, gas generated by decomposition of gas hydrate, and the apparatus comprising:
a pump that circulates condensate generated in a condenser to the vapor inlet side of the condenser;
a heat exchanger that causes heat to be exchanged between the circulating condensate and circulating water supplied to decompose gas hydrate; and
a pump that circulates the circulating water to a gas hydrate thermal decomposition tank.
